# EUROPEAN PATENT SPECIFICATION

(11) **EP 3 701 440 B1**
(45) Date of publication and mention of the grant of the patent: **02.12.2026**
(21) Application number: 17792020.4
(22) Date of filing: 25.10.2017
(51) Int. Cl.: G06Q 10/00, G06Q 10/10

(54) **OPERATION OF AN ELECTRONIC DEVICE DURING MAINTENANCE**
BETRIEB EINER ELEKTRONISCHEN VORRICHTUNG WÄHREND DER WARTUNG
FONCTIONNEMENT D'UN DISPOSITIF ÉLECTRONIQUE PENDANT LA MAINTENANCE

(43) Date of publication of application: 02.09.2020
(73) Proprietor: Telefonaktiebolaget LM Ericsson (publ), 164 83 Stockholm (SE)
(72) Inventor: ARAÚJO, José, SE-116 32 Stockholm (SE); PERSSON, Per, SE-247 34 Södra Sandby (SE); ANGELSMARK, Ola, SE-271 57 Ystad (SE); SMEETS, Bernard, SE-247 51 Dalby (SE)
(74) Representative: Ericsson
(86) International application number: PCT/EP2017/077341
(87) International publication number: WO 2019/081012

(56) References cited:
- ANONYMOUS: "udev", 1 March 2017 (2017-03-01), pages 1 - 8, XP093020543, Retrieved from the Internet <URL:https://web.archive.org/web/20170301061535/https://www.freedesktop.org/software/systemd/man/udev.html> [retrieved on 20230203]
- APPLE INC.: "Keeping your confidential data secure during hardware repair - Apple Support", 7 January 2017 (2017-01-07), pages 1 - 2, XP055882498, Retrieved from the Internet <URL:https://web.archive.org/web/20170107010218/https://support.apple.com/en-us/HT201857> [retrieved on 20220123]
- ANONYMOUS: "Release Notes for Debian 8 (jessie), 32-bit PC - Chapter 4. Upgrades from Debian 7 (wheezy)", 13 March 2017 (2017-03-13), pages 1 - 34, XP055428960, Retrieved from the Internet <URL:https://web.archive.org/web/20170313111522/http://www.debian.org/releases/stable/i386/release-notes/ch-upgrading.en.html#inform-users> [retrieved on 20171127]
- ANONYMOUS: "pam_mount(8) - pam_mount 2.6", 28 January 2017 (2017-01-28), pages 1 - 6, XP055428985, Retrieved from the Internet <URL:https://web.archive.org/web/20170128021937/http://pam-mount.sourceforge.net/pam_mount.8.html> [retrieved on 20171127]
- ANONYMOUS: "pam_mount.conf(5) - pam_mount 2.6", 24 May 2017 (2017-05-24), pages 1 - 18, XP055428990, Retrieved from the Internet <URL:https://web.archive.org/web/20170524165411/http://pam-mount.sourceforge.net/pam_mount.conf.5.html> [retrieved on 20171127]
- PATRICK VOLKERDING: "Slackware 8.1 to 9.0 Upgrade HOWTO", 19 March 2003 (2003-03-19), pages 1 - 2, XP055428981, Retrieved from the Internet <URL:https://mirrors.slackware.com/slackware/slackware-9.0/UPGRADE.TXT> [retrieved on 20171127]

## Description

### TECHNICAL FIELD

Embodiments presented herein relate to a method, an electronic device, a computer program, and a computer program product for operating the electronic device during maintenance.

### BACKGROUND

Some electronic devices rely on software for their operation. In some cases the electronic devices themselves are controlled by software (and/or firmware) supplied by the manufacturer of the electronic devices, and the operations performed by the electronic devices are controlled by software (such as software applications) supplied by the user of the electronic devices. The manufacturer of the electronic devices might issue software (and/or firmware) upgrades, to be applied at the electronic devices. Further, software applications might be developed and deployed on the electronic devices by the user. Both firmware and software applications might be considered as pieces of privacy sensitive information and as trade secrets by their respective owners.

The same scenario is applicable when the electronic devices are subjected to repairs and/or maintenance. Typically, the owner of the electronic devices would physically hand over the electronic devices to a repair and/or maintenance agent performing such repairs and/or maintenance.

When the device manufacturer or the repair and/or maintenance agent accesses the electronic devices for maintenance they might be able to access, either deliberately or by accident, the software applications deployed by the user as well as user data stored in the electronic devices, thus gaining access to privacy sensitive information.

Hence, there is a need for improved handling of electronic devices during maintenance.

The document XP055428960 (Anonymous: "Release Notes for Debian 8 (jessie), 32-bit PC - Chapter 4. Upgrades from Debian 7 (wheezy)", 13 March 2017) is relevant prior art.

### SUMMARY

An object of embodiments herein is to provide efficient handling of electronic devices during maintenance that alleviates, or at least mitigates or reduces, the issues noted above.

According to a first aspect there is presented a method for operating an electronic device during maintenance. The method is performed by the electronic device. The method comprises detecting initiation of a maintenance operation to be executed on the electronic device. The method comprises, in response thereto, rendering a selected set of information stored in the electronic device inaccessible until detecting completion of the maintenance operation.

According to a second aspect there is presented an electronic device for operating the electronic device during maintenance. The electronic device comprises processing circuitry. The processing circuitry is configured to cause the electronic device to detect initiation of a maintenance operation to be executed on the electronic device. The processing circuitry is configured to cause the electronic device to, in response thereto, render a selected set of information stored in the electronic device inaccessible until detecting completion of the maintenance operation.

According to a third aspect there is presented an electronic device for operating the electronic device during maintenance. The electronic device comprises a detect module configured to detect initiation of a maintenance operation to be executed on the electronic device. The electronic device comprises a render module configured to, in response thereto, render a selected set of information stored in the electronic device inaccessible until detecting completion of the maintenance operation.

Advantageously this method, these electronic devices, this computer program and this computer program product provide efficient handling of the electronic devices during maintenance.

Advantageously this method, these electronic devices, this computer program and this computer program product alleviate, or at least mitigate or reduce, the issues noted above.

Advantageously this method, these electronic devices, this computer program and this computer program product enable protection of proprietary information, such as trade secrets or other privacy sensitive information of the user, in the electronic device, as well as guarantee the veracity of the electronic device supplier or maintenance entity.

According to a fourth aspect there is presented a computer program for operating an electronic device during maintenance, the computer program comprising computer program code which, when run on the electronic device, causes the electronic device to perform a method according to the first aspect.

According to a fifth aspect there is presented a computer program product comprising a computer program according to the fourth aspect and a computer readable storage medium on which the computer program is stored. The computer readable storage medium could be a non-transitory computer readable storage medium.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communications system according to embodiments;
Fig. 2 is a flowchart of methods according to embodiments;
Fig. 3 is a schematic diagram showing functional units of an electronic device according to an embodiment;
Fig. 4 is a schematic diagram showing functional modules of an electronic device according to an embodiment;
Fig. 5 is a schematic diagram showing network equipment comprising an electronic device according to an embodiment;
Fig. 6 is a schematic diagram showing user equipment comprising an electronic device according to an embodiment; and
Fig. 7 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

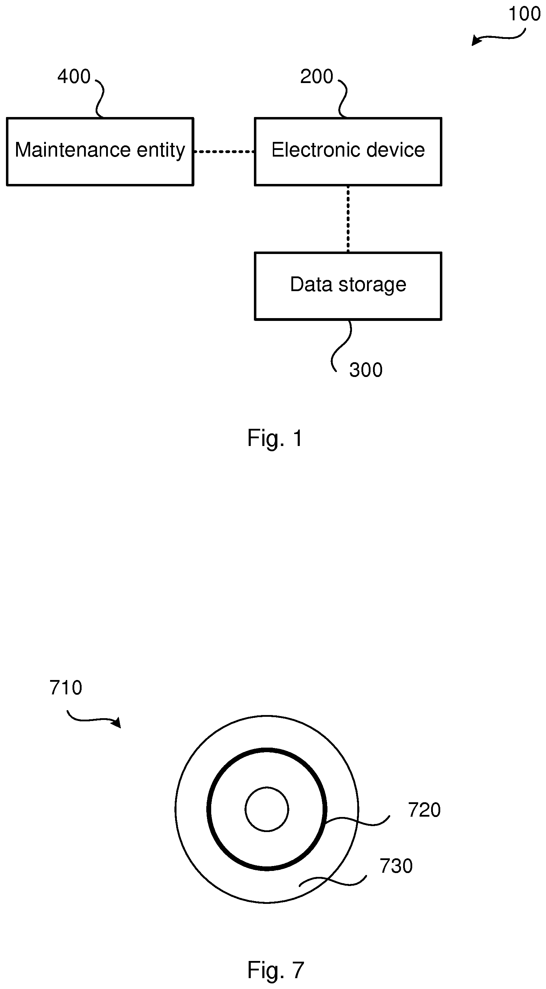

Fig. 1 is a schematic diagram illustrating a communications system 100 where embodiments presented herein can be applied. The communications system 100 comprises an electronic device 200, a data storage 300, and a maintenance entity 400. Dotted lines in Fig. 1 indicate operative connections.

It is assumed that a maintenance operation is to be executed on the electronic device 200. The maintenance operation is initiated by the maintenance entity 400. As disclosed above there is a risk that privacy sensitive information, or other trade secrets, are accessed by the maintenance entity 400 during maintenance of the electronic device 200.

The embodiments disclosed herein therefore relate to mechanisms for operating the electronic device 200 during maintenance that alleviates, or at least mitigates or reduces, the issues noted above as would otherwise occur when maintenance of the electronic device 200 is performed. In order to obtain such mechanisms there is provided an electronic device 200, a method performed by the electronic device 200, a computer program product comprising code, for example in the form of a computer program, that when run on an electronic device 200, causes the electronic device 200 to perform the method.

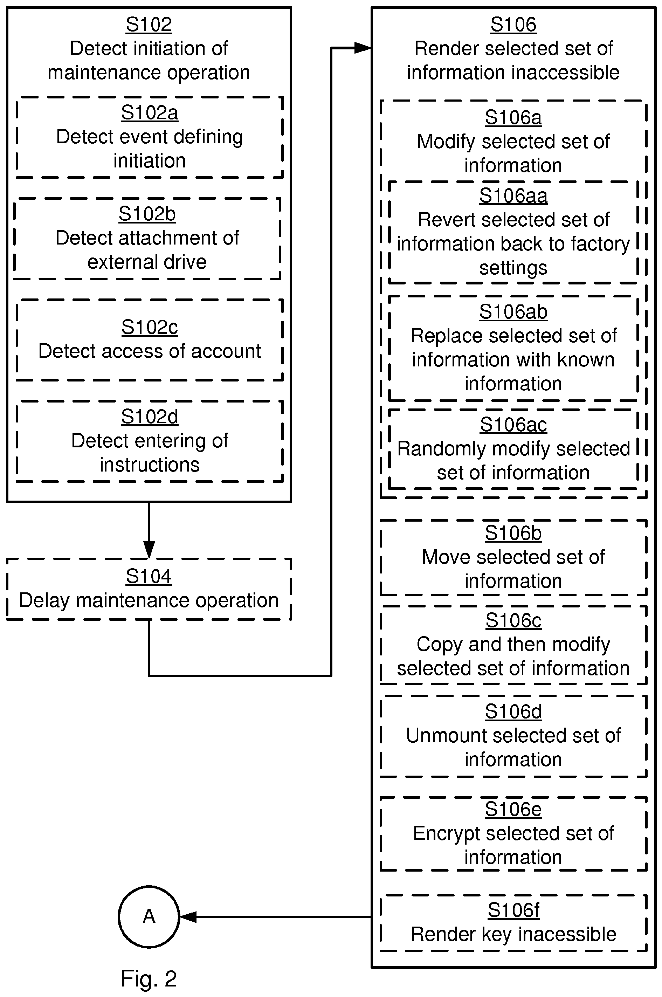

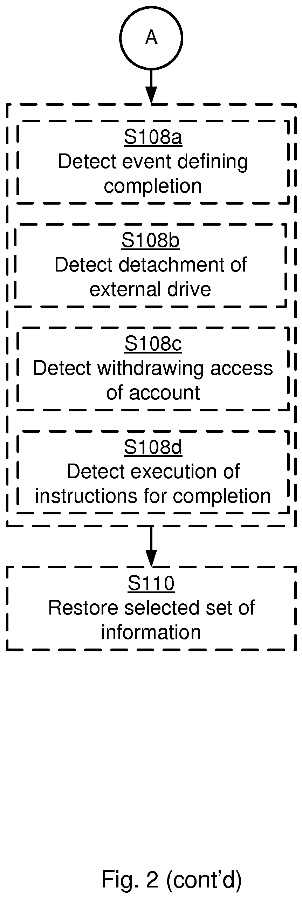

Fig. 2 is a flowchart illustrating embodiments of methods for operating the electronic device 200 during maintenance. The methods are performed by the electronic device 200. The methods are advantageously provided as computer programs 720.

It is assumed that maintenance is to be performed on the electronic device 200. Hence, the electronic device 200 is configured to perform step S102:
S102: The electronic device 200 detects initiation of a maintenance operation to be executed on the electronic device 200. Examples of how the initiation of the maintenance operation might be detected will be provided below.

In response to having detecting this initiation, the electronic device 200 hides information that is not to be accessed during the maintenance of the electronic device 200. Particularly, the electronic device 200 is configured to perform step S106:
S106: The electronic device 200, in response thereto (i.e. upon the detection in step S102), renders a selected set of information stored in the electronic device 200 inaccessible. The selected set of information is rendered inaccessible until detecting completion of the maintenance operation. Examples of how the set of information might be rendered inaccessible will be provided below.

Steps S102 and S106 enable sensitive data to be hidden during maintenance of the electronic device 200.

Embodiments relating to further details of operating the electronic device 200 during maintenance as performed by the electronic device 200 will now be disclosed.

There might be different examples of maintenance performed on the electronic device 200. In some aspects the maintenance concerns upgrading software and/or firmware. That is, according to an embodiment, the maintenance operation relates to updating of at least one of software and firmware in the electronic device 200.

There might be different types of information in the selected set of information.

In general terms, the selected set of information might include anything not part of factory settings of the electronic device 200, and/or information explicitly labelled as privacy sensitive information. Examples include, but are not limited to, proprietary software and proprietary data (such as collected sensor data, etc.). That is, according to an embodiment, the selected set of information represents: proprietary software, data recordings made, or obtained by, the electronic device 200, and/or information labelled as privacy sensitive.

In more detail, in some embodiments, the selected set of information comprises algorithms and/or data which is located and used by the electronic device 200 to operate. One example of an algorithm is a control algorithm. In another example, the data is operation data collected by a sensor. In some embodiments, the selected set of information is identified as algorithms or data which are not part of the factory settings of the electronic device 200. In some embodiments, the selected set of information has been explicitly labeled as privacy sensitive information by a user of the electronic device 200.

There might be different ways for the electronic device 200 to detect initiation of the maintenance operation in step S102.

In some embodiments, an event is detected in the electronic device 200 which means that a maintenance operation is about to be performed. One example of such an event is the attachment of an external drive to the electronic device 200. For example, the electronic device 200 might detect that a universal serial bus (USB) drive is mounted to the electronic device 200. Another example of such an event is the connection to the electronic device 200 of a maintenance account, which means that a maintenance operation is about to be performed. Yet another example of such an event is the entering of a pre-determined maintenance code on the electronic device 200, signifying that a maintenance operation is about to be performed.

That is, according to an embodiment, the electronic device 200 is configured to perform any of (optional) steps S102a-S102d in order to detect the initiation of the maintenance operation:
S102a: The electronic device 200 detects an event defining initiation of the maintenance operation.
S102b: The electronic device 200 detects an external drive being attached to the electronic device 200.
S102c: The electronic device 200 detects a maintenance operation account accessing the electronic device 200.
S102d: The electronic device 200 detects maintenance operation instructions being entered into the electronic device 200 for execution therein.

Any of steps S102a-S102d could be performed as part of step S102.

There might be different ways for the electronic device 200 to act once having detected the initiation of the maintenance operation in step S102.

In some aspects the maintenance operation is delayed until information has been hidden. Particularly, according to an embodiment, the electronic device 200 is configured to perform (optional) step S104:
S104: The electronic device 200 delays execution of the maintenance operation in the electronic device 200 until the selected set of information has been rendered inaccessible.

There might be different ways for the electronic device 200 to render the render the selected set of information inaccessible in step S106, for example in order to prevent the maintenance entity 400 from accessing privacy sensitive information during maintenance of the electronic device 200.

In some aspects, information in the electronic device 200 is made inaccessible to signals generated by the maintenance operation. That is, according to an embodiment, the maintenance operation comprises executing a set of maintenance operation instructions. The set of maintenance operation instructions generates a set of signals to be applied in the electronic device 200. The selected set of information is then rendered inaccessible for the set of signals.

In aspects, the electronic device 200 modifies the selected set of information in the electronic device 200. Examples of such modifications will be provided below.

In some aspects, using cryptographic keys stored on dedicated secure storage medium, or on the electronic device 200 itself, the electronic device 200 might establish a connection to a data storage 300 external to the electronic device 200. If the secure connection to the data storage 300 is established, the selected set of information might be moved to the data storage 300, and the medium comprising the cryptographic keys is removed and/or unmounted from the electronic device 200. In some embodiments, the selected set of information is thus transmitted to a data storage 300 and removed from the electronic device 200. This is suitable if the electronic device 200 does not have to operate during execution of the maintenance operation. In some embodiments, the selected set of information is transmitted to the data storage 300 and the selected set of information is modified in the electronic device 200. In this way, the electronic device 200 may still operate during execution of the maintenance operation. However, if such a secure connection cannot be established, or if the data storage 300 for some other reason rejects the connection to be established, the maintenance operation is not allowed and the execution of the maintenance operation is rejected or postponed until the electronic device 200 has render the selected set of information inaccessible in another way.

In some aspects, the selected set of information is allowed to be moved to the data storage 300 without the need to establish a secure connection. This could be the case if the electronic device 200 has authenticated the data storage 300.

In some aspects, the selected set of information is stored on a drive in the electronic device 200. The drive on which the selected set of information is stored might then be unmounted from the electronic device 200. This prevents the maintenance entity 400 from accessing the selected set of information.

In some aspects, the selected set of information is encrypted in response to detecting the initiation of the maintenance operation in step S102. This prevents the maintenance entity 400 from accessing the selected set of information, although the maintenance entity 400 might copy the thus encrypted selected set of information.

In some aspects, the selected set of information is already encrypted when the initiation of the maintenance operation is detected in step S102. The electronic device 200 might then hide a key for decrypting the selected set of information from the maintenance entity 400. This prevents the maintenance entity 400 from accessing the selected set of information, although the maintenance entity 400 might copy the thus encrypted selected set of information.

That is, according to an embodiment, the electronic device 200 is configured to perform any of (optional) steps S106a-S106f in order to render the selected set of information inaccessible:
S106a: The electronic device 200 modifies the selected set of information in the electronic device 200.
S106b: The electronic device 200 moves the selected set of information to a data storage 300 external to the electronic device 200.
S106c: The electronic device 200 copies the selected set of information to the data storage 300 external to the electronic device 200 and modifies the selected set of information in the electronic device 200.
S106d: The electronic device 200 unmounts a drive on the electronic device 200, on which drive the selected set of information is stored.
S106e: The electronic device 200 encrypts the selected set of information.
S106f: The electronic device 200 renders a key for decrypting the selected set of information inaccessible.

Any of steps S106a-S106f could be performed as part of step S106.

The data storage 300 might be located on a secure server which may be located on-site or off-site relative the electronic device 200.

As noted above, in some aspects the selected set of information is moved or copied to the data storage 300 over a secure connection. Particularly, according to an embodiment, when the selected set of information is moved or copied to the data storage 300 external to the electronic device 200, the selected set of information is communicated over a secured communications channel to the data storage 300 external to the electronic device 200.

There might be different ways for the electronic device 200 to modify the selected set of information in step S106a

In some embodiments, the modification of the selected set of information comprises replacing proprietary software with original factory software.

In some embodiments, the modification of the selected set of information comprises replacing proprietary software by basic and known software. In some embodiments, proprietary software is randomly modified. The same procedure may be applied to data stored in the electronic device 200.

Particularly, according to an embodiment, the electronic device 200 is configured to perform any of (optional) steps S106aa-S106ac in order to modify the selected set of information:
S106aa: The electronic device 200 reverts the selected set of information back to factory settings.
S106ab: The electronic device 200 replaces the selected set of information with information and/or settings known to the maintenance entity 400 initiating the maintenance operation.
S106ac: The electronic device 200 randomly modifies the selected set of information.

Any of steps S106aa-S106ac could be performed as part of step S106a.

There might be different ways for the electronic device 200 to detect completion of the maintenance operation. In general terms, how to detect completion of the maintenance operation is dependent on how the detect the initiation of the maintenance operation was detected in step S102.

For example, if the electronic device 200 detects an event defining initiation of the maintenance operation (as in step S102a), the electronic device 200 might detect another event defining completion of the maintenance operation.

Thus, in some embodiments, an event is detected in the electronic device 200 which means that the maintenance operation has been completed. One example of such an event is the detachment of an external drive from the electronic device 200. For example, the electronic device 200 might detect that a USB drive is unmounted from the electronic device 200. Another example of such an event is the disconnection of a maintenance account, which means that a maintenance operation has been completed. Yet another example of such an event is the completion of execution of pre-determined maintenance code on the electronic device 200, signifying that the maintenance operation is has been completed.

According to an embodiment, the electronic device 200 is configured to perform any of (optional) steps S108a-S108d to detect completion of the maintenance operation:
S108a: The electronic device 200 detects an event defining completion of the maintenance operation.
S108b: The electronic device 200 detects an external drive being detached from the electronic device 200.
S108c: The electronic device 200 detects a maintenance operation account withdrawing from accessing the electronic device 200.
S108d: The electronic device 200 detects maintenance operation instructions for completion of the maintenance operation being executed in the electronic device 200.

There might be different ways for the electronic device 200 to act upon completion of the maintenance operation.

In general terms, the objective is to again render the selected set of information accessible and thus to return the selected set of information to its state before the initiation of the maintenance operation was detected. How to act might thus depend on how the selected set of information was rendered inaccessible in step S106.

In some aspects, the selected set of information is again rendered accessible by the electronic device 200 performing the reversal of the operations for rendering the set of information inaccessible.

In some embodiments, the selected set of information stored at the data storage 300 is transmitted from the data storage 300 to the electronic device 200 for again being utilized by the electronic device 200.

Thus, in some aspects where the selected set of information is transmitted to the data storage 300 over a secure connection in step S106, the electronic device 200 might use cryptographic keys stored on dedicated secure storage medium, or on the electronic device 200 itself, to establish a new connection to the data storage 300 for transmission of the selected set of information back to the electronic device 200. However, if such a new secure connection cannot be established, or if the data storage 300 for some other reason rejects the connection to be established, the selected set of information might not be transmitted back to the electronic device 200.

Thus, in some aspects where the selected set of information is transmitted to the data storage 300 over a non-secure connection in step S106, the selected set of information back to the electronic device 200 might be transmitted back to the electronic device 200 without the use of cryptographic keys.

In some embodiments where a modified version of the selected set of information has been stored in the electronic device 200 whilst an original (i.e. unmodified) selected set of information has been moved to the data storage 300, the thus modified selected set of information in the electronic device 200 is removed from the electronic device 200 once the original selected set of information is received back from the data storage 300.

Thus, in some aspects where the selected set of information is modified in the electronic device 200 in step S106, the selected set of information is restored in the electronic device 200. Such a restoration is possible by using a mapping between the original selected set of information and the modified selected set of information, further assuming that the modification is not defined by a one way function.

Particularly, according to an embodiment, the electronic device 200 is configured to perform (optional) step S110:
S110: The electronic device 200 restores the selected set of information, upon completion of the maintenance operation, to its state in the electronic device 200 before initiation of the maintenance operation.

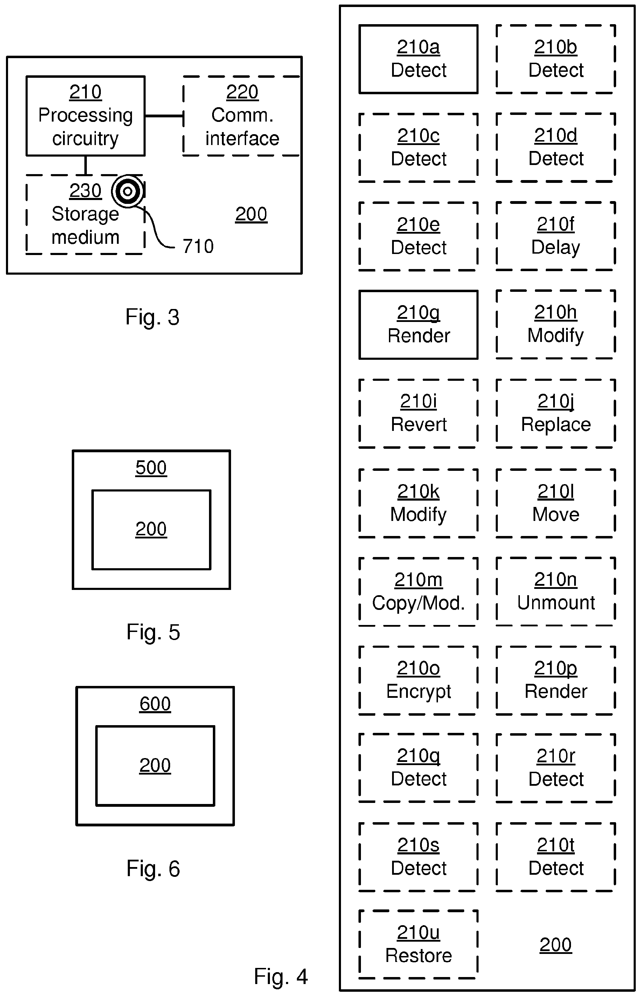

Further aspects of the electronic device 200 will be disclosed below with reference to Figs. 3, 4, 5, and 6.

Further aspects of the data storage 300 will now be disclosed.

The storage on the data storage 300 might be a common-purpose data storage. However, in some aspects the data storage 300 is aware of the maintenance cycle. This allows for the data storage 300 to be configured to perform further actions to protect the selected set of information (besides rejection due to invalid cryptographic keys, etc.).

For example, during initiation of the maintenance operation, the data storage 300 might receive and store the selected set of information and then set state information in the data storage 300 to indicate that a maintenance operation is underway.

For example, during initiation of the maintenance operation, the data storage 300 might reject the request for a secure connection if state information in the data storage 300 indicates that a maintenance operation of the electronic device 200 is already ongoing. The data storage 300 might then also indicate this to the electronic device 200.

For example, during execution of the maintenance operation and when state information in the data storage 300 thus indicates that a maintenance operation of the electronic device 200 is already ongoing, the data storage 300 might reject receiving a new piece of selected set of information. The data storage 300 might then also indicate this to the electronic device 200.

For example, upon completion of the maintenance operation, the data storage 300 might transmit the selected set of information back to the electronic device 200 and then set state information in the data storage 300 to indicate that a maintenance operation is completed (or that a maintenance operation is not currently performed).

For example, upon completion of the maintenance operation and when the state information in the data storage 300 indicates that a maintenance operation is completed (or that a maintenance operation is not currently performed), the data storage 300 might, when there is not any scheduled maintenance operation, reject a request to receive a new piece of selected set of information. The data storage 300 might then also indicate this to the electronic device 200.

In view of the above, the data storage 300 might be configured to perform data storage of the selected set of information as transmitted to the data storage 300 from the electronic device 200, to transmit the selected set of information back to the electronic device 200 when requested to do so, to prevent access to the selected set of information from non-authorized entities, and to (optionally) be aware of the maintenance cycle of the electronic device 200 in order to proactively enable data integrity.

Fig. 3 schematically illustrates, in terms of a number of functional units, the components of an electronic device 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 710 (as in Fig. 7), e.g. in the form of a storage medium 230. The processing circuitry 210 may further be provided as at least one application specific integrated circuit (ASIC), or field programmable gate array (FPGA).

Particularly, the processing circuitry 210 is configured to cause the electronic device 200 to perform a set of operations, or steps, S102-S110, as disclosed above. For example, the storage medium 230 may store the set of operations, and the processing circuitry 210 may be configured to retrieve the set of operations from the storage medium 230 to cause the electronic device 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The electronic device 200 may further comprise a communications interface 220 at least configured for communications with other entities, functions, nodes, drives, and devices, such as the data storage 300 and the maintenance entity 400. As such the communications interface 220 may comprise one or more transmitters and receivers, comprising analogue and digital components. The processing circuitry 210 controls the general operation of the electronic device 200 e.g. by sending data and control signals to the communications interface 220 and the storage medium 230, by receiving data and reports from the communications interface 220, and by retrieving data and instructions from the storage medium 230. Other components, as well as the related functionality, of the electronic device 200 are omitted in order not to obscure the concepts presented herein.

Fig. 4 schematically illustrates, in terms of a number of functional modules, the components of an electronic device 200 according to an embodiment. The electronic device 200 of Fig. 4 comprises a number of functional modules; a detect module 210a configured to perform step S102, and a render module 210g configured to perform step S106. The electronic device 200 of Fig. 4 may further comprise a number of optional functional modules, such as any of a detect module 210b configured to perform step S102a, a detect module 210c configured to perform step S102b, a detect module 210d configured to perform step S102c, a detect module 210e configured to perform step S102d, a delay module 210f configured to perform step S104, a modify module 210h configured to perform step S106a, a revert module 210i configured to perform step S106aa, a replace module 210j configured to perform step S106ab, a modify module 210k configured to perform step S106ac, a move module 2101 configured to perform step S106b, a copy and modify module 210m configured to perform step S106c, an unmount module 210n configured to perform step S106d, an encrypt module 210o configured to perform step S106e, a render module 210p configured to perform step S106f, a detect module 210q configured to perform step S108a, a detect module 210r configured to perform step S108b, a detect module 210s configured to perform step S108c, a detect module 210t configured to perform step S108d, and a restore module 210u configured to perform step S11o.

In general terms, each functional module 210a-210u may in one embodiment be implemented only in hardware and in another embodiment with the help of software, i.e., the latter embodiment having computer program instructions stored on the storage medium 230 which when run on the processing circuitry makes the electronic device 200 perform the corresponding steps mentioned above in conjunction with Fig 4. It should also be mentioned that even though the modules correspond to parts of a computer program, they do not need to be separate modules therein, but the way in which they are implemented in software is dependent on the programming language used. Preferably, one or more or all functional modules 210a-210u may be implemented by the processing circuitry 210, possibly in cooperation with the communications interface 220 and/or the storage medium 230. The processing circuitry 210 may thus be configured to from the storage medium 230 fetch instructions as provided by a functional module 210a-210u and to execute these instructions, thereby performing any steps as disclosed herein.

The electronic device 200 may be provided as a standalone device or as a part of at least one further device. For example, the electronic device 200 may be provided in network equipment or in user equipment. Fig. 5 is a schematic diagram showing network equipment 500 comprising an electronic device 200 according to an embodiment. Examples of network equipment include, but are not limited to, radio access network nodes, functions, entities, and devices as well as core network nodes, functions, entities, and devices. Fig. 6 is a schematic diagram showing user equipment 600 comprising an electronic device 200 according to an embodiment. Examples of user equipment include, but are not limited to, wireless devices, mobile stations, mobile phones, handsets, wireless local loop phones, user equipment (UE), smartphones, laptop computers, tablet computers, network equipped vehicles, network equipped sensors, and Internet of things (IoT) devices.

Further, the functionality of the electronic device 200 may be distributed between at least two such nodes, functions, entities, or devices. Thus, a first portion of the instructions performed by the electronic device 200 may be executed in a first device, and a second portion of the of the instructions performed by the electronic device 200 may be executed in a second device; the herein disclosed embodiments are not limited to any particular number of devices on which the instructions performed by the electronic device 200 may be executed. Hence, the methods according to the herein disclosed embodiments are suitable to be performed by an electronic device 200 residing in a cloud computational environment. Therefore, although a single processing circuitry 210 is illustrated in Fig. 3 the processing circuitry 210 may be distributed among a plurality of devices, or nodes. The same applies to the functional modules 210a-210u of Fig. 4 and the computer program 720 of Fig. 7 (see below).

Fig. 7 shows one example of a computer program product 710 comprising computer readable storage medium 730. On this computer readable storage medium 730, a computer program 720 can be stored, which computer program 720 can cause the processing circuitry 210 and thereto operatively coupled entities and devices, such as the communications interface 220 and the storage medium 230, to execute methods according to embodiments described herein. The computer program 720 and/or computer program product 710 may thus provide means for performing any steps as herein disclosed.

In the example of Fig. 7, the computer program product 710 is illustrated as an optical disc, such as a CD (compact disc) or a DVD (digital versatile disc) or a Blu-Ray disc. The computer program product 710 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 can be stored in any way which is suitable for the computer program product 710.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for operating an electronic device (200) during maintenance, the method being performed by the electronic device (200), the method comprising:
detecting (S102) initiation of a maintenance operation to be executed on the electronic device (200), wherein the detecting the initiation of the maintenance operation comprises at least one of:
detecting (S102b) an external drive being attached to the electronic device (200), and
detecting (S102c) a maintenance operation account accessing the electronic device (200); and in response thereto:
rendering (S106) a selected set of information stored in the electronic device (200) inaccessible until detecting completion of the maintenance operation, wherein rendering the selected set of information inaccessible comprises modifying (S106a) the selected set of information in the electronic device (200), and wherein when the selected set of information is modified, the selected set of information is modified by at least one of:
reverting (S106aa) the selected set of information back to factory settings,
replacing (S106ab) the selected set of information with information and/or settings known to a maintenance entity (400) initiating the maintenance operation, and
randomly modifying (S106ac) the selected set of information; and wherein detecting completion of the maintenance operation comprises at least one of:
detecting (S108b) the external drive being detached from the electronic device (200), and
detecting (S108c) a maintenance operation account withdrawing from accessing the electronic device (200); and
delaying (S104) execution of the maintenance operation in the electronic device (200) until the selected set of information has been rendered inaccessible.

2. The method according to claim 1, wherein the selected set of information represents at least one of:
proprietary software,
data recordings made, or obtained by, the electronic device (200), and
information labelled as privacy sensitive.

3. The method according to claim 1, wherein the maintenance operation relates to updating of at least one of software and firmware in the electronic device (200).

4. The method according to claim 1, wherein the electronic device (200) is part of network equipment (500) or user equipment (600).

5. An electronic device (200) configured to operate during maintenance, the electronic device (200) comprising processing circuitry (210), the processing circuitry being configured to cause the electronic device (200) to:
detect initiation of a maintenance operation to be executed on the electronic device (200) by the processing circuitry being configured to:
detect an external drive being attached to the electronic device (200), and/or
detect a maintenance operation account accessing the electronic device (200); and in response thereto:
render a selected set of information stored in the electronic device (200) inaccessible until detecting completion of the maintenance operation by the processing circuitry being configured to: modify the selected set of information in the electronic device (200), wherein when the selected set of information is modified, the selected set of information is modified by the processing circuitry being configured to:
revert the selected set of information back to factory settings,
replace the selected set of information with information and/or settings known to a maintenance entity (400) initiating the maintenance operation, and/or
randomly modify the selected set of information;
wherein the electronic device (200) is configured to detect completion of the maintenance operation by the processing circuitry being configured to:
detect the external drive being detached from the electronic device (200), and/or
detect a maintenance operation account withdrawing from accessing the electronic device (200); and
wherein the processing circuitry further is configured to: delay execution of the maintenance operation in the electronic device (200) until the selected set of information has been rendered inaccessible.

6. The electronic device (200) according to claim 5, wherein the selected set of information represents at least one of:
proprietary software,
data recordings made, or obtained by, the electronic device (200), and
information labelled as privacy sensitive.

7. The electronic device (200) according to claim 5, wherein the maintenance operation relates to updating of at least one of software and firmware in the electronic device (200).

8. The electronic device (200) according to claim 5, wherein the electronic device (200) is part of network equipment (500) or user equipment (600).

## Patentansprüche

1. Verfahren zum Betreiben einer elektronischen Vorrichtung (200) während einer Wartung, wobei das Verfahren durch die elektronische Vorrichtung (200) durchgeführt wird, das Verfahren umfassend:
Erfassen (S102) einer Einleitung eines Wartungsvorgangs, der auf der elektronischen Vorrichtung (200) auszuführen ist, wobei das Erfassen der Einleitung des Wartungsvorgangs mindestens eines umfasst von:
Erfassen (S102b), dass ein externes Laufwerk an die elektronische Vorrichtung (200) angeschlossen wird und
Erfassen (S102c) eines Wartungsvorgangskontos, das auf die elektronische Vorrichtung (200) zugreift; und als Antwort darauf:
Unzugänglichmachen (S106) eines ausgewählten Satzes von Informationen, der in der elektronischen Vorrichtung (200) gespeichert ist, bis zum Erfassen des Abschlusses des Wartungsvorgangs, wobei das Unzugänglichmachen des ausgewählten Satzes von Informationen ein Modifizieren (S106a) des ausgewählten Satzes von Informationen in der elektronischen Vorrichtung (200) umfasst, und wobei, wenn der ausgewählte Satz von Informationen modifiziert wird, der ausgewählte Satz von Informationen durch mindestens eines modifiziert wird von:
Zurücksetzen (S106aa) des ausgewählten Satzes von Informationen auf Werkseinstellungen,
Ersetzen (S106ab) des ausgewählten Satzes von Informationen durch Informationen und/oder Einstellungen, die einer Wartungsentität (400) bekannt sind, die den Wartungsvorgang einleitet und
zufälligem Modifizieren (S106ac) des ausgewählten Satzes von Informationen; und wobei das Erfassen des Abschlusses des Wartungsvorgangs mindestens eines umfasst von:
Erfassen (S108b), dass das externe Laufwerk von der elektronischen Vorrichtung (200) getrennt wird und
Erfassen (S108c) eines Wartungsvorgangskontos, das sich von einem Zugriff auf die elektronische Vorrichtung (200) zurückzieht; und
Verzögern (S104) der Ausführung des Wartungsvorgangs in der elektronischen Vorrichtung (200), bis der ausgewählte Satz von Informationen unzugänglich gemacht worden ist.

2. Verfahren nach Anspruch 1, wobei der ausgewählte Satz von Informationen mindestens eines darstellt von:
proprietärer Software,
Datenaufzeichnungen, die durch die elektronische Vorrichtung (200) erstellt oder erhalten werden, und Informationen, die als datenschutzsensibel gekennzeichnet sind.

3. Verfahren nach Anspruch 1, wobei sich der Wartungsvorgang auf ein Aktualisieren von mindestens einem von Software und Firmware in der elektronischen Vorrichtung (200) bezieht.

4. Verfahren nach Anspruch 1, wobei die elektronische Vorrichtung (200) Teil einer Netzwerkeinrichtung (500) oder einer Benutzereinrichtung (600) ist.

5. Elektronische Vorrichtung (200), die konfiguriert ist, um während der Wartung betrieben zu werden, die elektronische Vorrichtung (200) umfassend einen Verarbeitungsschaltkreis (210), wobei der Verarbeitungsschaltkreis konfiguriert ist, um zu bewirken, dass die elektronische Vorrichtung (200):
die Einleitung eines Wartungsvorgangs erfasst, der auf der elektronischen Vorrichtung (200) auszuführen ist, indem der Verarbeitungsschaltkreis konfiguriert ist zum:
Erfassen, dass ein externes Laufwerk an die elektronische Vorrichtung (200) angeschlossen wird und/oder
Erfassen eines Wartungsvorgangskontos, das auf die elektronische Vorrichtung (200) zugreift; und als Antwort darauf:
einen ausgewählten Satz von Informationen, der in der elektronischen Vorrichtung (200) gespeichert ist, unzugänglich macht, bis zum Erfassen des Abschlusses des Wartungsvorgangs, dadurch, dass der Verarbeitungsschaltkreis konfiguriert ist zum: Modifizieren des ausgewählten Satzes von Informationen in der elektronischen Vorrichtung (200), wobei, wenn der ausgewählte Satz von Informationen modifiziert wird, der ausgewählte Satz von Informationen dadurch modifiziert wird, dass der Verarbeitungsschaltkreis konfiguriert ist zum:
Zurücksetzen des ausgewählten Satzes von Informationen auf Werkseinstellungen,
Ersetzen des ausgewählten Satzes von Informationen durch Informationen und/oder Einstellungen, die einer Wartungsentität (400) bekannt sind, die den Wartungsvorgang einleitet und/oder
zufälligen Modifizieren des ausgewählten Satzes von Informationen;
wobei die elektronische Vorrichtung (200) konfiguriert ist, um den Abschluss des Wartungsvorgangs dadurch zu erfassen, dass der Verarbeitungsschaltkreis konfiguriert ist zum:
Erfassen, dass das externe Laufwerk von der elektronischen Vorrichtung (200) getrennt wird und/oder
Erfassen eines Wartungsvorgangskontos, das sich von dem Zugriff auf die elektronische Vorrichtung (200) zurückzieht; und
wobei der Verarbeitungsschaltkreis ferner konfiguriert ist zum: Verzögern der Ausführung des Wartungsvorgangs in der elektronischen Vorrichtung (200), bis der ausgewählte Satz von Informationen unzugänglich gemacht worden ist.

6. Elektronische Vorrichtung (200) nach Anspruch 5, wobei der ausgewählte Satz von Informationen mindestens eines darstellt von:
proprietärer Software,
Datenaufzeichnungen, die durch die elektronische Vorrichtung (200) erstellt oder erhalten werden, und Informationen, die als datenschutzsensibel gekennzeichnet sind.

7. Elektronische Vorrichtung (200) nach Anspruch 5, wobei sich der Wartungsvorgang auf das Aktualisieren von mindestens einem von Software und Firmware in der elektronischen Vorrichtung (200) bezieht.

8. Elektronische Vorrichtung (200) nach Anspruch 5, wobei die elektronische Vorrichtung (200) Teil einer Netzwerkeinrichtung (500) oder einer Benutzereinrichtung (600) ist.

## Revendications

1. Procédé de mise en opération d'un dispositif électronique (200) pendant une maintenance, le procédé étant mis en œuvre par le dispositif électronique (200), le procédé comprenant :
la détection (S102) de l'initiation d'une opération de maintenance à exécuter sur le dispositif électronique (200), dans lequel la détection de l'initialisation de l'opération de maintenance comprend au moins l'une parmi :
la détection (S102b) d'un lecteur externe étant attaché au dispositif électronique (200), et
la détection (S102c) d'un compte d'opération de maintenance accédant au dispositif électronique (200) ; et en réponse à celle-ci :
le fait de rendre (S106) un ensemble choisi d'informations stockées dans le dispositif électronique (200) inaccessible jusqu'à la détection de l'achèvement de l'opération de maintenance, dans lequel le fait de rendre l'ensemble choisi d'informations inaccessible comprend la modification (S106a) de l'ensemble choisi d'informations dans le dispositif électronique (200), et dans lequel lorsque l'ensemble choisi d'informations est modifié, l'ensemble choisi d'informations est modifié par au moins l'un parmi :
le rétablissement (S106aa) de l'ensemble choisi d'informations aux paramètres d'usine,
le remplacement (S106ab) de l'ensemble choisi d'informations par des informations et/ou des paramètres connus d'une entité de maintenance (400) initiant l'opération de maintenance, et
la modification aléatoire (S106ac) de l'ensemble choisi d'informations ; et dans lequel la détection de l'achèvement de l'opération de maintenance comprend au moins l'un parmi :
la détection (S108b) du lecteur externe étant détaché du dispositif électronique (200), et
la détection (S108c) d'un compte d'opération de maintenance se retirant de l'accès au dispositif électronique (200) ; et
le retardement (S104) de l'exécution de l'opération de maintenance dans le dispositif électronique (200) jusqu'à ce que l'ensemble choisi d'informations ait été rendu inaccessible.

2. Procédé selon la revendication 1, dans lequel l'ensemble choisi d'informations représente au moins l'un parmi :
des logiciels propriétaires,
des enregistrements de données réalisés, ou obtenus par, le dispositif électronique (200), et des informations étiquetées comme sensibles en matière de confidentialité.

3. Procédé selon la revendication 1, dans lequel l'opération de maintenance se rapporte à la mise à jour d'au moins l'un parmi un logiciel et un micrologiciel dans le dispositif électronique (200).

4. Procédé selon la revendication 1, dans lequel le dispositif électronique (200) fait partie d'un équipement de réseau (500) ou d'un équipement d'utilisateur (600).

5. Dispositif électronique (200) configuré pour opérer pendant une maintenance, le dispositif électronique (200) comprenant une circuiterie de traitement (210), la circuiterie de traitement étant configurée pour amener le dispositif électronique (200) à :
détecter l'initiation d'une opération de maintenance à exécuter sur le dispositif électronique (200) par la circuiterie de traitement étant configurée pour :
détecter un lecteur externe connecté au dispositif électronique (200), et/ou
détecter un compte d'opération de maintenance accédant au dispositif électronique (200) ; et en réponse à celle-ci :
rendre un ensemble choisi d'informations stockées dans le dispositif électronique (200) inaccessible jusqu'à la détection de l'achèvement de l'opération de maintenance par la circuiterie de traitement étant configurée pour : modifier l'ensemble choisi d'informations dans le dispositif électronique (200), dans lequel lorsque l'ensemble choisi d'informations est modifié, l'ensemble choisi d'informations est modifié par la circuiterie de traitement étant configurée pour :
rétablir l'ensemble choisi d'informations aux paramètres d'usine,
remplacer l'ensemble choisi d'informations par des informations et/ou des paramètres connus d'une entité de maintenance (400) initiant l'opération de maintenance, et/ou
modifier de manière aléatoire l'ensemble choisi d'informations ;
dans lequel le dispositif électronique (200) est configuré pour détecter l'achèvement de l'opération de maintenance par la circuiterie de traitement étant configurée pour :
détecter le lecteur externe étant détaché du dispositif électronique (200), et/ou
détecter un compte d'opération de maintenance se retirant de l'accès au dispositif électronique (200) ; et
dans lequel la circuiterie de traitement est en outre configurée pour : retarder l'exécution de l'opération de maintenance dans le dispositif électronique (200) jusqu'à ce que l'ensemble choisi d'informations ait été rendu inaccessible.

6. Dispositif électronique (200) selon la revendication 5, dans lequel l'ensemble choisi d'informations représente au moins l'un parmi :
des logiciels propriétaires,
des enregistrements de données réalisés, ou obtenus par, le dispositif électronique (200), et des informations étiquetées comme sensibles en matière de confidentialité.

7. Dispositif électronique (200) selon la revendication 5, dans lequel l'opération de maintenance se rapporte à la mise à jour d'au moins l'un parmi un logiciel et un micrologiciel dans le dispositif électronique (200).

8. Dispositif électronique (200) selon la revendication 5, dans lequel le dispositif électronique (200) fait partie d'un équipement de réseau (500) ou d'un équipement d'utilisateur (600).
